# FASCICULE DE BREVET EUROPEEN

(11) **EP 0 310 481 B1**
(45) Date de publication et mention de la délivrance du brevet: **24.02.1993**
(21) Numéro de dépôt: 88402407.6
(22) Date de dépôt: 23.09.1988
(51) Int. Cl.: B25J 9/02, B25J 9/10

(54) **Dispositif pour déplacer un mobile, et en particulier un préhenseur de manutention dans un plan vertical**
Vorrichtung zum Verfahren eines Auslegers, insbesondere eines Handhabungsgreifers in vertikaler Richtung
Apparatus for moving a manipulator, particularly a gripper, in a vertical plane

(30) Priorité: 02.10.1987 FR 8713653
(43) Date de publication de la demande: 05.04.1989
(73) Titulaire: Eude, Bernard Claude Pierre, F-14880 Hermanville/Mer (FR)
(72) Inventeur: Eude, Bernard Claude Pierre, F-14880 Hermanville/Mer (FR)
(74) Mandataire: Lemoine, Robert

(56) Documents cités:
- WO-A-83/02106
- DE-A- 3 215 700
- FR-A- 2 587 927
- FR-A- 2 590 560
- GB-A- 1 226 936
- US-A- 2 679 940
- US-A- 3 575 301

## Description

L'invention porte sur un dispositif pour déplacer un mobile, comprenant un premier chariot déplaçable le long d'une première piste, et un second chariot portant le mobile et déplaçable le long d'une seconde piste sous la commande d'un élément flexible apte à être entraîné par un organe moteur fixe adjacent à l'une des extrémités de la première piste, l'élément flexible étant formé de deux brins passant chacun sur des premiers organes de renvoi montés sur le premier chariot ainsi que sur des seconds organes de renvoi montés sur le second chariot. FR-A-2 587 927 concerne un dispositif de déplacement de ce type dans lequel les brins de l'élément flexible s'étendent de part et d'autre du premier chariot, le long de deux côtés de l'espace susceptible d'être décrit par le mobile porté par le second chariot.

Or ces brins, du fait de leur localisation particulière, limitent les zones à partir desquelles il est possible d'accéder à l'espace pouvant être balayé par le mobile.

La présente invention se propose de remédier à cet inconvénient et, pour ce faire, elle a pour objet un dispositif de déplacement du type indiqué ci-dessus,qui se caractérise en ce que :
- le second chariot s'étend de part et d'autre du premier chariot ;
- la seconde piste est sécante de la première piste ;
- les premiers organes de renvoi sont situés de part et d'autre de la seconde piste ; et
- les deux brins de l'élément flexible s'étendent de part et d'autre de la première piste et passent sur les seconds organes de renvoi qui sont situés au-delà des premiers organes de renvoi, leurs extrémités étant immobilisées à l'extrémité de la première piste qui est opposée à l'organe moteur.

Grâce à cet ensemble de dispositions, l'espace dans lequel le mobile peut se déplacer est maintenant accessible de tout côté puisque l'élément flexible s'étend uniquement le long de la première piste et du second chariot.

On notera ici que, quel que soit le sens du déplacement imprimé au second chariot, et donc au mobile, l'élément flexible comporte toujours un brin absorbé et un brin débité, la longeur absorbée étant rigoureusement égale à la longeur débitée. L'élément flexible est donc toujours sous tension et l'on n'a plus à limiter ni les vitesses, ni les accélérations, ni les freinages. En outre, le dispositif peut fonctionner dans tous les plans.

Par ailleurs, l'organe moteur est fixe. Ni la première piste, ni la seconde piste, ni aucun des deux chariots n'a à supporter le poids et l'encombrement de cet organe moteur.

Selon un mode de réalisation préféré de l'invention, le premier chariot est constitué par quatre plaques se faisant face deux à deux pour constituer un tunnel pour le second chariot, deux des plaques portant des organes de roulement extérieurs coopérant avec des rails portés par deux fers en U fixes pour former la première piste, les deux autres plaques portant des organes de roulement intérieurs coopérant avec des rails solidaires du second chariot pour former la seconde piste, les fers en U fixes, entretoisés par une plaque d'extrémité, contenant les moyens pour déplacer le premier chariot, tandis que le second chariot est constitué par deux fers en U opposés dont les bases reçoivent les rails de la seconde piste, réunis par des plaques s'étendant au-delà des fers en U, qui reçoivent à leur tour des plaques d'extrémité dont l'une porte le mobile.

Avantageusement, les premiers organes de renvoi sont montés aux extrémités des plaques du premier chariot qui portent les organes de roulement intérieurs tandis que les seconds organes de renvoi sont montés entre les extrémités des plaques du second chariot, au-delà des fers en U, les brins de l'élément flexible longeant le second chariot s'étendant au niveau des ouvertures des fers en U.

Ces dispositions permettent de réaliser un dispositif d'une grande rigidité, d'une grande résistance et d'un prix de revient raisonnable, puisqu'il fait appel à des matériaux du commerce.

Un mode de réalisàtion de l'invention est maintenant décrit à titre d'exemple non limitatif en référence aux dessins annexés dans lesquels:
la figure 1 est une vue de côté d'un dispositif conforme à l'invention;

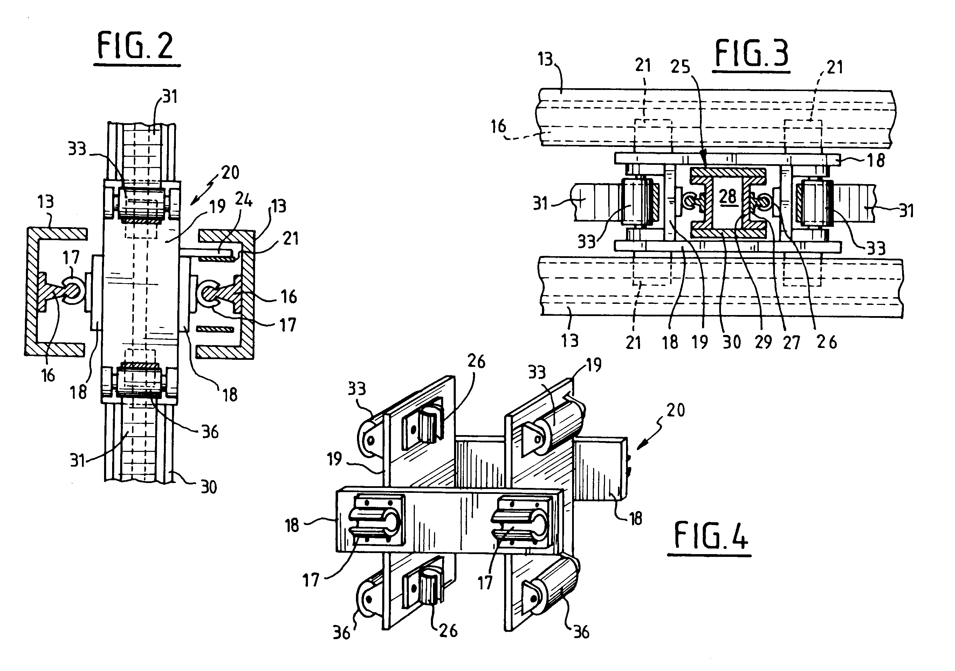

la figure 2 est une vue en coupe longitudinale à plus grande échelle selon la ligne II-II de la figure 1;
la figure 3 est une vue en coupe horizontale à même échelle selon la ligne III-III de la figure 1; et
la figure 4 est une vue en perspective de l'un des ensembles constituant le dispositif.

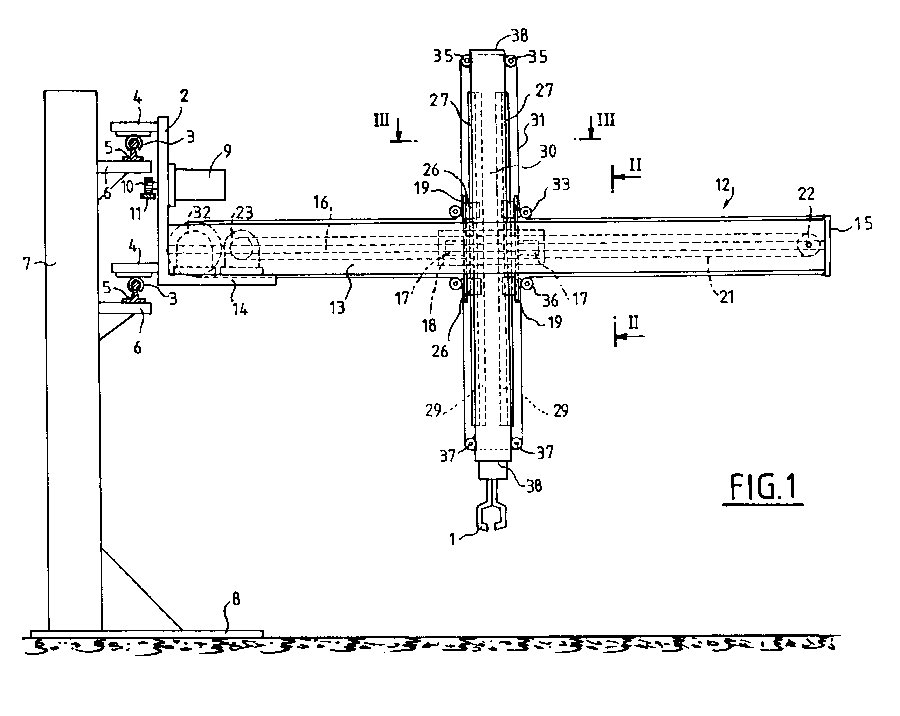

Le dispositif représenté a été conçu pour déplacer un mobile constitué ici par le préhenseur 1 dans le plan de la figure 1. Il est monté sur une potence 2, elle-même équipée de douilles à billes 3 portées par des supports 4 et coopérant avec des rails 5 portés par des supports 6 solidaires de colonnes 7 fixées au sol en 8. Cette disposition classique permet de déplacer le dispositif dans des plans parallèles à celui de la figure 1 et de couvrir ainsi par exemple tout un espace de manutention ou de stockage, la potence 2 étant déplacée par un moteur 9 dont le pignon 10 collabore avec une courroie crantée 11.

La première piste 12 du dispositif est constituée par deux fers en U 13 se faisant face montés sur le plateau 14 de la console 2 et réunis par une plaque d'extrémité 15 qui assure la rigidité. Les fers en U 13 reçoivent des rails 16 qui collaborent avec des douilles à billes 17 portées par des plaques longitudinales 18 soudées sur les tranches de deux plaques transversales 19 pour constituer le premier chariot 20. L'entraînement du premier chariot 20 est assuré par une courroie 21 circulant dans l'un des fers en U 13, entre une poulie d'extrémité 22 et un moteur d'entraînement 23. La poulie 22 est montée dans le fer en U 13, au voisinage de son extrémité. Le moteur 23 est monté fixe à l'autre extrémité et repose donc sur le plateau 14. La courroie 21 est fixée sur un ancrage 24 solidaire de l'une des plaques 18 et donc du premier chariot 20.

Il est aisé de concevoir que toute rotation du moteur 23 déplace de façon classique le chariot 20 tout au long de la piste 12.

La seconde piste 25 est constituée par quatre douilles à billes 26 disposées verticalement à l'intérieur du chariot 20 sur les plaques 19, qui coopèrent avec des rails verticaux 27 solidaires du second chariot 28 formé par la réunion de deux fers en U 29, contenant les rails 27 et les douilles à billes 26, réunis par deux plaques 30 qui, pour des raisons qui seront expliquées plus loin, s'étendent légèrement au-delà des fers en U 29.

La courroie 31 qui assure les mouvements dans un sens ou dans un autre du second chariot 28 est entraînée par un moteur 32 disposé au-delà du moteur 23 sur le plateau 14 et ancrée à ses deux extrémités sur la plaque d'extrémité 15.

Le brin supérieur de la courroie 31 forme une boucle grâce à deux poulies 33 montées sur des bras 34 aux extrémités supérieures des plaques 19 et à deux autres poulies 35 portées par les portions des plaques 30 qui s'étendent au-delà des fers en U 29.

De la même manière, le brin inférieur de la courroie 31 forme une boucle semblable grâce à deux poulies 36 symétriques des poulies 33 et à deux poulies 37 symétriques des poulies 35.

Il est à noter que les axes et les dimensions des poulies 33, 35, 36 et 37 ont été choisis de telle sorte que les trajets de la courroie 31 soient horizontaux et verticaux et qu'en outre les brins verticaux soient, au moins approximativement, au niveau des ouvertures des fers en U 29. Cette disposition améliore grandement l'esthétique de l'appareil et protège la partie intérieure des fers en U ouverts vers l'extérieur de toute salissure en coopération avec les plaques d'extrémité 38 soudées sur les plaques 30 et dont l'une porte le préhenseur 1.

Pour déplacer le chariot vertical 28, et donc le préhenseur 1, il suffit d'entraîner le moteur 32 dans un sens ou dans un autre. Les extrémités de la courroie 31 étant ancrées, la rotation du moteur 32 provoque un raccourcissement de l'un des brins et un allongement de même amplitude de l'autre brin et donc le mouvement désiré du second chariot 28.

Il résulte clairement de l'explication qui précède que les trois moteurs permettant tous les déplacements du préhenseur 1 dans le plan de la figure 1 et dans tout plan parallèle sont portés par la potence 2. En particulier, le premier chariot 20 ne porte aucun moteur et le dispositif est donc bien plus léger, bien meilleur marché et plus esthétique que ceux existant, dans lesquels le moteur assurant les mouvements du second chariot est porté par le premier. En outre, les vitesses de déplacement et les accélérations ou freinages des chariots et donc de la charge ne sont pas soumises à des limitations puisque les courroies sont toujours sous tension sans besoin de masse additionelle.

## Revendications

1. Dispositif pour déplacer un mobile (1), comprenant un premier chariot (20) déplaçable le long d'une première piste (12), et un second chariot (28) portant le mobile (1) et déplaçable le long d'une seconde piste (25) sous la commande d'un élément flexible (31) apte à être entrainé par un organe moteur fixe (32) adjacent à l'une des extrémités de la première piste (22), l'élément flexible (31) étant formé de deux brins passant chacun sur des premiers organes de renvoi (33, 36) montés sur le premier chariot (20) ainsi que sur des seconds organes de renvoi (35, 37) montés sur le second chariot (28), caractérisé en ce que :
- le second chariot (28) s'étend de part et d'autre du premier chariot (20);
- la seconde piste (25) est sécante de la première piste (12) ;
- les premiers organes de renvoi (33, 36) sont situés de part et d'autre de la seconde piste (25) ; et
- les deux brins de l'élément flexible (31) s'étendent de part et d'autre de la première piste (12) et passent sur les seconds organes de renvoi (35, 37) qui sont situés au delà des premiers organes de renvoi (33, 36), leurs extrémités étant immobilisées à l'extrémité de la première piste (12) qui est opposée à l'organe moteur (32).

2. Dispositif selon la revendication 1, **caractérisé** en ce que le premier chariot (20) est constitué par quatre plaques (18, 19) se faisant face deux à deux pour constituer un tunnel pour le second chariot (28).

3. Dispositif selon la revendication 2, **caractérisé** en ce que deux des plaques (18) portent des organes de roulement extérieurs (17) coopérant avec des rails (16) portés par deux fers en U fixes (13) pour former la première piste (12), les deux autres plaques (19) portant des organes de roulement intérieurs (26) coopérant avec des rails (27) solidaires du second chariot (28) pour former la seconde piste (25).

4. Dispositif selon la revendication 3, **caractérisé** en ce que les fers en U fixes (13), entretoisés par une plaque d'extrémité (15), contiennent les moyens (21, 22, 23) pour déplacer le premier chariot (20).

5. Dispositif selon la revendication 3 ou la revendication 4, **caractérisé** en ce que le second chariot (28) est constitué par deux fers en U opposés (29) dont les bases reçoivent les rails (27) de la seconde piste (25), ces rails étant réunis par des plaques (30) s'étendant au-delà des fers en U (29) et recevant à leur tour des plaques d'extrémité (38) dont l'une porte le mobile (1).

6. Dispositif selon la revendication 5, **caractérisé** en ce que les premiers organes de renvoi (33, 36) sont montés aux extrémités des plaques (19) du premier chariot (20) qui portent les organes de roulement intérieurs (26) tandis que les seconds organes de renvoi (35, 37) sont montés entre les extrémités des plaques (30) du second chariot (28), au-delà des fers en U (29).

7. Dispositif selon la revendication 6, **caractérisé** en ce que les brins de l'élément flexible (31) longeant le second chariot (28) s'éntendent au niveau des ouvertures des fers en U (29).

## Claims

1. A device for mainpulating a moving object (1), comprising a first carriage (20) displaceable along a first track (12) and a second carriage (28) which carries the moving object (1) and is displaceable along a second track (25) under the control of a flexible member (31) adapted to be driven by a motor unit (32) mounted near one end of the first track (22), the flexible member (31) being formed by two strands each passing over first return units (33,36) mounted on the first carriage (20) and over second return units (35,37) mounted on the second carriage (28), characterized in that:
- the second carriage (28) extends from one side of the first carriage (20) to the other;
- the second track (25) cuts through the first track (12);
- the first return units (33, 36) are disposed on both sides of the second track (25); and
- the two strands of the flexible member (31) extend on either side of the first track (12) and pass over the second return units (33, 36), their extremities being fixed at the far end of the first track (12) from the motor unit (32).

2. A device as in Claim 1, characterized in that the first carriage (20) consists four panels (18, 19) set face to face in pairs to form a tunnel for the second carriage (28).

3. A device as in Claim 2, characterized in that two of the panels (18) carry exterior runners (17) running on rails (16) mounted on two fixed channel members (13) to form the first track (12), whilst the other two panels (19) carry interior runners (26) running on rails (27) integral with the second carriage (28) and forming the second track (25)

4. A device as in Claim 3, characterized in that the fixed channel members (13) which are braced by an end panel (15), contain the displacement means (21,22,23) for the first carriage (20).

5. A device as in Claim 3 or 4, characterized in that the second carriage (28) consists of two opposing channel members (29), on the webs of which are mounted the rails (27) forming the second track (25), the said rails being joined together by panels (30) which extend beyond the channel members (29) and in their turn carry end plates (38), on of which carries the moving object (1).

6. A device as in Claim 5, characterized in that the first return units (33, 36) are mounted on the ends of the panels (19) in the first carriage (20) which carry the interior runners (26), whilst the second return units (35, 37) are mounted between the ends of the panels (30) in the second carriage (28), beyond the channel members (29).

7. A device as in Claim 6, characterized in that the strands of the flexible member (31) flanking the second carriage (28) extend level with the open sides of the channel members (29).

## Patentansprüche

1. Vorrichtung zum Verfahren eines Auslegers (1) bestehend aus einem entlang einer ersten Bahn (12) beweglichen Schlitten (20) und einem den Ausleger (1) tragenden und sich entlang einer zweiten Bahn bewegenden zweiten Schlitten (28) gesteuert von einem flexiblen Element (31), der von einem unbeweglichen unmittelbar am Ende der ersten Bahn (22) angebrachten Antriebsorgan (32) angetrieben werden kann, wobei das flexible Element (31) aus zwei Trumen besteht, die über die ersten auf dem ersten Schlitten (20) angebrachten Umlenk- Organen (33,36) und über die auf dem zweiten Schlitten (28) angebrachten zweiten Umlenk-Organen (35,37) laufen, **dadurch gekennzeichnet, daß:**
- der zweite Schlitten sich beidseitig des ersten Schlittens (20) ausdehnt;
- die zweite Bahn (25) die erste Bahn (12) schneidet;
- die ersten Umlenk-Organen (33, 36) an beiden Seiten der zweiten Bahn (25) angebracht sind; und
- die zwei Trume des flexiblen Elementen (31) sich beidseitig der ersten Bahn (12) strecken und über die zweiten Umlenk-Organen (35, 37) laufen, die hinter der ersten Umlenk-Organen (33, 36) angebracht sind, wobei ihre Enden am Ende der gegenüber dem Antriebsorgan (32) gelegenen ersten Bahn (12) festgemacht sind.

2. Vorrichtung entsprechend Anspruch 1, **dadurch gekennzeichnet, daß** der erste Schlitten (20) aus vier gegenüberliegenden Platten (18, 19) besteht, die für den zweiten Schlitten (28) einen Tunnel bilden.

3. Vorrichtung entsprechend Anspruch 2, **dadurch gekennzeichnet, daß** zwei der Platten (18) die äußeren Roll-Organen (17) tragen, die mit durch zwei unbewegliche U- Träger (13) getragenen Schienen (16) zusammenwirken, um die erste Bahn (12) zu bilden, während die zwei anderen Platten (19) innere Roll-Organe (26) tragen, die mit am zweiten Schlitten (28) befestigten Schienen (27) mitwirken, um die zweite Bahn (25) zu bilden.

4. Vorrichtung entsprechend Anspruch 3, **dadurch gekennzeichnet, daß** die durch eine Endplatte (15) verbundenen unbeweglichen U-Träger (13) die Mittel (21, 22, 23) zur Bewegung des ersten Schlittens (20) beinhalten.

5. Vorrichtung entsprechend Anspruch 3 oder Anspruch 4, **dadurch gekennzeichnet, daß** der zweite Schlitten (28) aus zwei gegenüberliegenden U-Trägern (29) besteht, deren Füße die Schienen (27) der zweiten Bahn (25) erhalten, wobei diese Schienen durch über die U-träger (29) hinausragenden Platten (30) verbunden sind, die ihrerseits Endplatten (38) erhalten, wovon eine den Ausleger (1) trägt.

6. Vorrichtung entsprechend Anspruch 5, **dadurch gekennzeichnet, daß** die ersten Umlenk-Organen (33, 36) an den Enden der Platten (19) des ersten Schlittens (20) montiert sind, die die inneren Roll-Organen (26) tragen, während die zweiten Umlenk-Organen (35,37) an den Enden der Platten (30) über die U-Träger (29) hinaus angebracht sind.

7. Vorrichtung entsprechend Anspruch 6, **dadurch gekennzeichnet, daß** die Trume des flexiblen Elementen (31) sich entlang des zweiten Schlittens in Höhe der Öffnungen der U-Träger (29) strecken.
